# EUROPEAN PATENT SPECIFICATION

(11) **EP 1 548 908 B1**
(45) Date of publication and mention of the grant of the patent: **13.01.2010**
(21) Application number: 02755016.9
(22) Date of filing: 01.08.2002
(51) Int. Cl.: H02G 1/02, G03F 7/20

(54) **METHOD AND DEVICE FOR INSPECTING LINEAR INFRASTRUCTURES**
VERFAHREN UND EINRICHTUNG ZUR UNTERSUCHUNG LINEARER INFRASTRUKTUREN
PROCEDE ET DISPOSITIF D'INSPECTION D'INFRASTRUCTURES LINEAIRES

(43) Date of publication of application: 29.06.2005
(73) Proprietor: Union Fenosa Distribucion, S.A., 28033 Madrid (ES)
(72) Inventor: GUERRA LLAMAS, Angel, Maria, 28033 MADRID (ES); FERNANDEZ PELLICER, Manuel, Domingo, 28033 MADRID (ES); FERNANDEZ ALVAREZ, Domingo, 28033 MADRID (ES); DELGADO SANCHO, Alfonso, 28033 MADRID (ES); SAENZ DE BURUAGA MOLINA, Maria, José, 28005 MADRID (ES); NISTAL RODRIGUEZ, Tomás, 28005 MADRID (ES)
(74) Representative: Carpintero Lopez, Francisco
(86) International application number: PCT/ES2002/000389
(87) International publication number: WO 2004/015833

(56) References cited:
- PATENT ABSTRACTS OF JAPAN & JP 10 117 415 A (MITSUBISGI ELECTRIC CORP) 06 May 1998
- PATENT ABSTRACTS OF JAPAN & JP 04 252 982 A (NEC CORP) 08 September 1992
- PATENT ABSTRACTS OF JAPAN & JP 04 156 212 A (CHUBU ELECTRIC POWER CO INC) 28 May 1992
- PATENT ABSTRACTS OF JAPAN & JP 03 060 311 A (MITSUBISHI ELECTRIC CORP) 15 March 1991
- PATENT ABSTRACTS OF JAPAN & JP 03 060 312 A (MITSUBISHI ELECTRIC CORP) 15 March 1991
- PATENT ABSTRACTS OF JAPAN & JP 03 060 313 A (MITSUBISHI ELECTRIC CORP) 15 March 1991
- PATENT ABSTRACTS OF JAPAN & JP 02 036 707 A (FUJIKURA LTD) 06 February 1990
- PATENT ABSTRACTS OF JAPAN & JP 02 046 118 A (FURUKAWA ELECTRIC CO LTD) 15 February 1990
- PATENT ABSTRACTS OF JAPAN & JP 02 074 111 A (FUJIKURA LTD) 14 March 1990

## Description

### OBJECT OF THE INVENTION

The present invention refers to a method and a device, installed in a mobile means, for inspecting linear infrastructures, such as railway lines, overhead electric lines, gas pipelines, etc.

The purpose of the invention consists of the visual and thermographic and visual control of these linear infrastructures quickly and safely, which is carried out with great precision in a wholly independent manner, without the need for human intervention in the capture of the information on the basis of which this control is performed; with the result that the mobile means that captures this information can move at a speed that is higher than when supervision is carried out by hand.

### BACKGROUND OF THE INVENTION

Correct maintenance of certain linear infrastructures, such as overhead electric lines, as well as management of stock taking, has taken on special importance due to the needs generated at the electricity companies for optimizing facilities, reducing operating costs, increasing reliability and improving the service and customer confidence.

Traditionally, overhead medium and high voltage lines have been inspected from the ground by teams or gangs walking the whole length of the lines, backed up by off-road vehicles.

These inspections, which are performed at intervals depending on the type of line, the company's policy or if legally stipulated even, generally speaking require a double inspection. One, consisting of a quick run over, in order to detect major faults that may arise in the actual line and survey the surroundings, and the other more detailed, which is carried out sometimes by climbing the line supports in order to detect possible defects in its components.

Airborne inspection devices have been used for years, mostly installed in helicopters, fitted with gyrostabilised platforms with infrared spectrum sensors for thermographic inspection and visible spectrum sensors for visual inspection.

On high voltage lines both the foregoing types of inspection mentioned are performed, one more general and for surveillance of the surroundings, and the other equivalent to what would be done by an inspector who climbed up the support to examine the line components for defects, which entails the need to perform two types of inspections at a different rate: while the general inspection may be performed at 40 - 60 km/h, the detailed one is done at 7 - 20 km/h, depending on the line voltage.

Medium voltage lines, below 45 kv., all present added problems which make it not viable to use conventional airborne systems for inspecting them. To be specific, these lines are more irregular and therefore more difficult to follow from a helicopter, besides the fact that the number of branches present gives rise to a larger number of non-operational flights, thus reducing inspection efficiency enormously, which has an impact on cost and makes the application of these systems uneconomic.

Airborne systems for inspecting overhead electric lines are known, such as those disclosed by the Japanese patents with publication number JP-03060311, JP-03060312 and JP-03060313, which consist of a system for capturing images of overhead electric lines which focus on the capture of images through a TV camera, so as to reproduce these images later upon returning to base and convert them into digital images, which are stored and subsequently processed. The processing of these images is geared to detecting sharp variations in brightness, which may indicate trouble in said line.

Similar comments may be made on Japanese patents with publication numbers JP-10117415 and JP-04156212, which are based on the processing and subsequent digitalization of the images captured by a TV camera operated from a helicopter, for processing on the ground, where troubles in such lines may be detected by means of certain parameters, such as brightness and sudden changes in it.

All these inventions, however, are based on the processing of the images captured, but none of them is aimed at a prime defect of these systems, which is their slowness and lack of stability in the process of capturing images of the line.

### DESCRIPTION OF THE INVENTION

The method and device for inspecting linear infrastructures advocated here resolves the afore-mentioned problem to full satisfaction, with the result that a single operator controlling all the systems may carry out a single inspection of the linear infrastructure at a lower financial cost.

For this purpose and more specifically the invention proposed refers to a method for inspecting linear infrastructures, such as for instance overhead electric lines, either automatically or semi-automatically, by means of on-board devices on an aerial or land mobile means independent of the latter, which are handled by a single operator who controls all the systems.

The invention is defined by the features of the independent claims. Preferred embodiments of the invention are defined in the dependent claims.

The inspection method is arranged in two stages. First of all, collection of information, which is carried out by means of the on-board device on the mobile means, for instance, a helicopter, and which is provided, amongst other things, with two gyrostabilised platforms that operate in an independent and simultaneous way, one of which will be responsible for collecting the panoramic images and the other responsible for collecting the detailed images, the second stage of the method being of the subsequent post-processing which is carried out in the laboratory.

The method consists, in short, of the capture of information carried out from the mobile, which may be aerial or land, of the lie of the electric line or linear infrastructure in question, on the basis of the knowledge by the system of the spatial positions of the facilities to be checked during the inspection. At the information collection stage the following operations are performed:
- Visual panoramic capture of the sequence of images of the lie and surroundings of the line in an automatic or semiautomatic way.
- Detailed automatic capture of images of the line components with high spatial resolution.
- Thermographic capture of the line components by way of an infrared spectrum camera with a radiometric high-sensitivity detector, with automatic capture of images in digital format
- Capture of data relating to the position and attitude of the helicopter, attitude of the image capturing devices, sensor aiming lines, and other navigation data, with a common time base.
In the post-processing stage the following tasks are performed:
- Synchronous reproduction of the mission with editing of stored data sources, for carrying out the inspection on them and evaluation of the state of the facility.
- Positioning of supports or components of the line or its surroundings which make it possible to calculate the exact situation of any of these points with a precision of less than 3 metres.
- Measurement of relative distances between conflictive points on the basis of line images captured, such as the distance between the conductor and the ground, other lines, nearby buildings, roads, etc.
- Automatic hotspot detection from the infrared spectrum images.

The on-board gyrostabilised platforms will operate in a self-contained, simultaneous and independent fashion, thereby achieving a panoramic and detailed inspection without the need for the helicopter to stop when reaching the supports.

Detailed images of sufficient spatial resolution are captured thanks on the one hand to the fact that the sensor responsible for capturing these images has a large number of sensitive elements (pixels), and, on the other, because the field of vision is narrower. The resultant spatial resolution in the images is higher and enables a greater level of detail to be made out than in the panoramic images during post-processing in the laboratory.

The first platform panoramic sensors carry out a sweep over the line, directed either automatically by the automatic aiming device, or else manually by means of the action of the operator on the control console of this platform. In the former case the automatic aiming is done in accordance with the pre-defined position of the line, the position of the helicopter obtained by means of a satellite global positioning system global, such as GPS and inertial systems that determine the a<ttitude of the helicopter. If the operation is done manually, due to the absence of data on the position of the infrastructure to be analysed, the actual operator will be the one to guide this first platform.

The second platform detail sensors aim automatically at one of the objects predetermined before the mission. In automatic operating mode the aiming line is defined from the predefined position of all the objects, and the position and attitude of the helicopter measured. In the event of the first platform being guided manually, the second platform uses the data collected by the first one, which obtains panoramic images, so as to aim automatically at different elements of the linear infrastructure.

The on-board means or devices make it possible to use the data stored and acquired in real time to calculate and control the lines of sight of each of the image capturing systems forming the device, while these lines of sight and fields of vision of the image acquisition devices are independent of one another and parameterizable in accordance with the type of linear infrastructure to be inspected.

In this aerial inspection, the operator is aided by a navigation or geographic information system which indicates the helicopter's position and the course followed, the lie of the lines on which the inspection is being carried out and the mapping of the surrounding area. The aiming lines and fields of vision of the different sensors are also shown to facilitate the inspection operation.

All the on-board systems are independent of the helicopter's own avionics: inertial systems, GPS, altimeters, audio intercommunicators, etc., so the system is completely portable and adaptable to different helicopters or mobile means assigned to inspection.

These on-board systems are also managed by a single operator, who controls the whole of the systems with a single interface. The central unit on-board the mobile means stores or records all the information obtained in conjoint fashion: GPS flight positions, positions of the support bases, panoramic visual images, detail visual, infrared spectrum images, helicopter attitude, flying time, etc., so that in the subsequent processing in the laboratory the whole inspection may be reproduced in synchronized form, with the result that direct access may be obtained to any of the data sources from a single input.

All these system capabilities, and whenever there is information on the geographic position of the facility, make it possible for the device to be able to aim the sensors automatically towards said facility so that the manual intervention will not be required of the operator, who will only have to make the necessary checks on the proper working of all the system equipment.

To perform any inspection operation and in the specific of it being a medium voltage line, the mobile means may be aerial and, more specifically, a helicopter, which will fly over this line at a constant speed of 80-100 km/h, at a vertical distance above the ground of some 50-65 meters, with a lateral displacement over the axis of the line of 0-15 meters. In the case of a high voltage line, the speed is reduced to 35-60 km/h.

When the aerial inspection has been performed, the whole of the information is transferred to the laboratory, where all the information collected in the field is analysed and in the end the report is issued with the diagnosis and appraisal made. Finally, a management system is designed that adapts to every customer's needs, so that the information supplied to maintenance supervisors will be a suitable basis for scheduling correct effective maintenance.

Since the position obtained from the GPS do not match up with the coordinates of the objects visualized in the images, but with the position of the helicopter, triangulation algorithms have been developed for calculating the global 3D position of an object from the two images where it appears, which are used both for siting the defects detected and for correcting data relating to the position of the facility that might be incorrectly loaded in the starting database.

For this post-processing laboratory stage and in order to reduce the work of analysing the information captured while flying over the line and to minimize possible human errors, the following algorithms have been developed:
■ Measurement of relative 3D distances between two points,
■ Positioning by means of absolute coordinates
■ Improvement and enhancement of visible and infrared spectrum images,
■ Automatic hotspot detection by means of a morphological erosion process

All this information processed during a first inspection at a specific facility may be used in subsequent inspections, feeding the system back and thereby improving its performance.

### DESCRIPTION OF THE DRAWINGS

To complete the description that is being given and in order to assist a better understanding of the features of the invention, in accordance with a preferred embodiment of same, a set of drawings is attached as an integral part of this description wherein, for purely informative and non-restrictive purposes, the following is represented:
Figure 1.- It shows a block diagram of the on-board devices with which the first stage or phase of the inspection method is performed.
Figure 2.- It shows a block diagram of the devices used in the post-processing laboratory with which the second stage or phase of the inspection method is performed.

### PREFERRED EMBODIMENT OF THE INVENTION

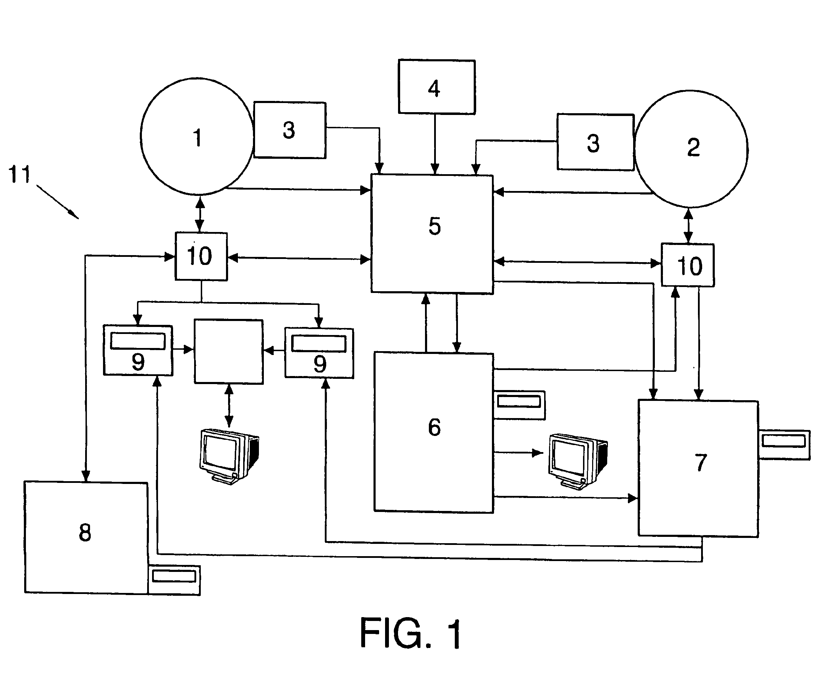

In the above-mentioned figures, specifically in figure 1, a block diagram is represented of the on-board devices with which the first stage or phase of the inspection method is performed.

The on-board system (11) is made up of two gyrostabilised platforms. The panoramic platform (1), which may be controlled automatically or manually, is responsible for capturing images in video format, with a broad fixed field of vision, so as to be able to make the diagnosis of the line environment: tree-covering, crossings, etc. and which also has a radiometric high-resolution infrared sensor that supplies infrared images in PAL format and thermograms which are stored in digital format for subsequent analysis.

The other platform (2), which obtains the detailed information, is made up of a digital video system that captures high resolution digital photographs. The subsequent processing of these photographs will offer detailed information on the state of the facilities (staples, cables, insulators, protection devices, etc.).

Both platforms (1) and (2) are oriented (10), the first manually or automatically, and the second automatically, in such a way that simultaneous images are captured with two different fields of vision and resolution.

The on-board devices (11) also include an AHRS inertial system(3) for measuring the attitude of the helicopter all the time, a GPS receiver(4) with differential correction in real time which supplies the helicopter's position in real time; a management computer (5) which contains a module that enables changes to be made in respect of the mission previously generated in the laboratory; another one that gives the required navigation and aiming data for the mission to be carried out and which stores the data while the mission is being performed; another one which controls the digital camera, and another which controls the infrared camera; a navigation computer (6) which contains a module that calculates the line of sight of the platforms all the time for the mission to be performed automatically and a module that indicates the state of all the equipment making up the on-board system and gives an alarm signal if a failure occurs in any of these items of equipment; a computer for capturing digital images (7) which stores the digital photographs that are taken with the detail platform (2)in real time and without compression; a computer for capturing thermograms (8) which carries out the capture of thermograms in digital format for subsequent analysis in the laboratory; and lastly, DV-CAM format recording videos(9).

Devices (4, 5, 6, 7, 8 and 9) are built into an industrial rack which houses all these devices, provided with a single keypad that gives access to the different computers or CPUs and allows images from any of the sources to be viewed, while also collecting with the same time base all the data and images needed for the subsequent processing of the information in the laboratory.

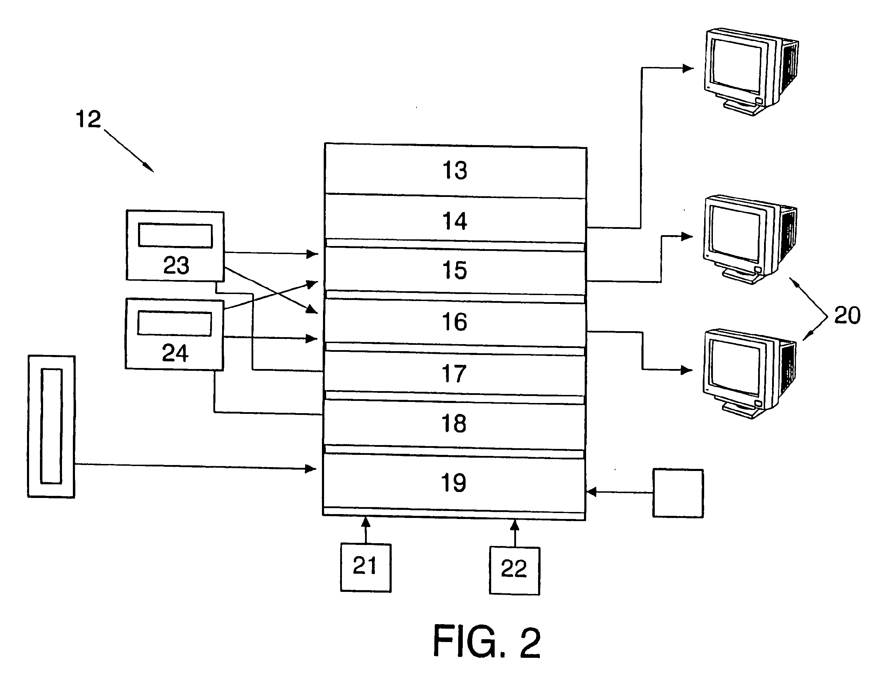

The devices forming part of the post-processing stage (12) are shown in figure 2, containing a diagrammatic representation of these devices, which act together with the specific algorithms developed to automate and optimize the tasks performed during analysis in the laboratory and which basically consist of a post- processing PC (13) that comprises a whole series of devices required for the processing of the images, such as a detailed image capturing card(14), a video image digitalization card (15), an infrared image digitalization card(16), two communications ports (17 and 18), SCSI controller card (19), as well as the respective display monitors (20), DVD (21), CD - ROM (22) and video units (23 y 24).

If the starting data are not too precise, the efficiency of the first inspection that is performed on a facility may fall short of the objective defined. In this case the data obtained from the first inspection would be fed back into the system, so that the efficiency of the inspection is increased at later inspections.

## Claims

1. Device for inspecting linear infrastructures that consists of a system (11) installed in a mobile for the automatic acquisition and capture of images and data, and a post-processing unit (12), not on-board the mobile, which permits the processing of information and/or signals obtained by the on-board system (11), **characterised in that** the acquisition and capture of images and data by on-board means is carried out irrespective of the movement of the mobile, and with various angles and lines of sights at the same time, aiming said means to the linear infrastructure in an automatic or semi automatic way on the basis of data stored in the system, the data relating to the spatial positions of the facilities to be inspected.

2. Device for inspecting linear infrastructures according to claim 1 **characterised in that** on-board system (11) comprise two gyrostabilised platforms (1,2) operating independently at the same time and irrespective of the movement of the mobile, where said platforms (1,2) have the means for the acquisition and capture of images.

3. Device for inspecting linear infrastructures according to claim 2 **characterised in that** one of the gyrostabilised platforms (1) may be directed or aimed either automatically or manually and has means for the acquisition and capture of images in video format of the line environment and also an infrared sensor that supplies infrared images and thermograms.

4. Device for inspecting linear infrastructures according to claim 2 **characterised in that** the other gyrostabilised platform (2) is directed or aimed automatically and is made up of a digital video system that captures high resolution digital photographs.

5. Device for inspecting linear infrastructures according to previous claims **characterised in that** the image acquisition means provide simultaneously images in video format of the infrastructure in its surroundings, infrared images and thermograms, as well as high resolution digital photographs with detailed information on the state of the facilities of said linear infrastructure.

6. Device for inspecting linear infrastructures according to previous claims **characterised in that** it has means that use the data stored and acquired in real time by the system to calculate and control the lines of sight of the systems for data and/or image capture that constitute the device.

7. Device for inspecting linear infrastructures according to claim 6 **characterised in that** the lines of sight and fields of vision of the image and data acquisition devices are independent of one another and parameterizable features of the infrastructure to be inspected.

8. Device for inspecting linear infrastructures according to claim 1 **characterised in that** on-board system (11) also include means for the acquisition of data of the attitude of the mobile as well as the geographical position in real time.

9. Device for inspecting linear infrastructures according to previous claims **characterised in that** on-board system (11) also include means for recording and storing the information acquired and captured with a common time base so that in the subsequent processing in the laboratory the whole inspection may be reproduced in synchronized form, with the result that direct access may be obtained to any of the data sources from a single input.

10. Device for inspecting linear infrastructures according to claim 1 **characterised in that** the post-processing unit (12) has means capable of calculating the geographic position of the defects detected in the inspection as well as the position of the infrastructure itself, by means of triangulation algorithms developed for calculating the global 3D position of an object from two images taken from two different angles, and also **characterised in that** the post-processing stage (12) has means for automatic hotspot detection from the infrared spectrum images acquired by on-board system (11).

11. Device for inspecting linear infrastructures according to claims 1 to 10 **characterised in that** mobile where on-board system (11) is installed is an aircraft or a land vehicle.

12. Method for inspecting linear infrastructures that comprises:
- Using stored data relating to the spatial position of the linear infrastructure that is to be checked.
- Automatic panoramic visual capture of the linear infrastructure to be inspected in video format of the infrastructure and its surroundings.
- Automatic detailed visual capture of the components of the linear infrastructure to be inspected by means of digital images of the components of the aforesaid infrastructure.
- Automatic capture in infrared spectrum of the components of the linear infrastructure inspected and post-process detection in these images of possible hotspots in the facility.
- Recording by the on-board system (11) of the data obtained by the sensors, filming cameras, navigation and control and audio sensors which form part of the device with a common time base.
- Use of a post-process unit (12), not installed on the mobile, which handles and analyses the data and images obtained by the unit installed in it during the inspection of the linear infrastructure.
- Storage of the data processed by the post-processing unit (12)
- Generation of reports on the state, situation and defects found in the linear infrastructure analysed.

13. Method for inspecting linear infrastructures that comprises:
- Panoramic visual capture of the linear infrastructure to be inspected and its surroundings by means of manual operation with operator intervention, and in video format.
- Automatic detailed visual capture of the components of the linear infrastructure to be inspected by means of digital images of the components of the aforesaid infrastructure.
- Automatic capture in infrared spectrum of the components of the linear infrastructure inspected and post-process detection in these images of possible hotspots in the facility.
- Recording by the on-board system (11) of the data obtained by the sensors, filming cameras, navigation and control and audio sensors which form part of the device with a common time base.
- Use of a post-process unit (12), not installed on the mobile, which handles and analyses the data and images obtained by the unit installed in it during the inspection of the linear infrastructure.
- Storage of the data processed by the post-processing unit (12)
- Generation of reports on the state, situation and defects found in the linear infrastructure analysed.

14. Method for inspecting linear infrastructures according to claims 12 or 13 **characterised in that** linear infrastructure positioning data obtained and processed by the post-processing unit (12) have the necessary precision to feed the system on successive linear infrastructure inspections.

## Patentansprüche

1. Vorrichtung zur Untersuchung linearer Infrastrukturen, bestehend aus einem in einem Fahrzeug installierten System (11) zur automatischen Erfassung und Aufnahme von Bildern und Daten, und einer nicht an Bord des Fahrzeugs befindlichen Nachverarbeitungseinheit (12), welche das Verarbeiten von durch das Bordsystem (11) erhaltenen Informationen und/oder Signalen ermöglicht, **dadurch gekennzeichnet, dass** das Erfassen und Aufnehmen von Bildern und Daten durch Bordeinrichtungen ungeachtet der Bewegung des Fahrzeugs und unter verschiedenen Winkeln und Sichtlinien gleichzeitig durchgeführt wird, wobei die Einrichtung in automatischer oder halbautomatischer Weise auf der Basis von in dem System gespeicherten Daten auf die lineare Infrastruktur gerichtet wird, wobei die Daten die Raumpositionen der zu untersuchenden Einrichtungen betreffen.

2. Vorrichtung zum Untersuchen linearer Infrastrukturen nach Anspruch 1, **dadurch gekennzeichnet, dass** das Bordsystem (11) zwei kreiselstabilisierte Plattformen (1, 2) aufweist, welche unabhängig voneinander gleichzeitig und ungeachtet der Bewegung des Fahrzeugs arbeiten, wobei die Plattformen (1, 2) die Einrichtungen zum Erfassen und Aufnehmen von Bildern aufweisen.

3. Vorrichtung zum Untersuchen linearer Infrastrukturen nach Anspruch 2, **dadurch gekennzeichnet, dass** eine der kreiselstabilisierten Plattformen (1) entweder automatisch oder manuell gelenkt oder gerichtet wird und Einrichtungen zum Erfassen und Aufnehmen von Videoformat-Daten der Leitungsumgebung und ferner einen Infrarotsensor aufweist, welcher Infrarotbilder und Thermogramme liefert.

4. Vorrichtung zum Untersuchen linearer Infrastrukturen nach Anspruch 2, **dadurch gekennzeichnet, dass** die andere kreiselstabilisierte Plattform (2) automatisch gelenkt oder gerichtet wird und aus einem digitalen Videosystem besteht, das hochaufgelöste Digitalfotografien aufnimmt.

5. Vorrichtung nach einem der vorhergehenden Ansprüche, **dadurch gekennzeichnet, dass** die Bilderfassungseinrichtungen gleichzeitig Videoformat-Bilder der Infrastruktur in ihrer Umgebung, Infrarotbilder und Thermogramme sowie hochaufgelöste Digitalfotografien mit detaillierten Informationen über den Zustand der Einrichtungen der linearen Infrastruktur liefern.

6. Vorrichtung nach einem der vorhergehenden Ansprüche, **dadurch gekennzeichnet, dass** sie Einrichtungen aufweist, welche die in Echtzeit durch das System gespeicherten und erfassten Daten zum Berechnen und Steuern der Sichtlinien der die Vorrichtung bildenden Systeme zur Daten- und/oder Bilderfassung verwenden.

7. Vorrichtung zum Untersuchen linearer Infrastrukturen nach Anspruch 6, **dadurch gekennzeichnet, dass** die Sichtlinien und die Sichtfeder der Bild- und Datenerfassungsvorrichtungen voneinander unabhängig und parametrierbare Eigenschaften der zu untersuchenden Infrastruktur sind.

8. Vorrichtung zum Untersuchen linearer Infrastrukturen nach Anspruch 1, **dadurch gekennzeichnet, dass** das Bordsystem (11) ferner Einrichtungen zur Echtzeiterfassung von Daten bezüglich der Lage sowie der geographischen Position aufweist.

9. Vorrichtung nach einem der vorhergehenden Ansprüche, **dadurch gekennzeichnet, dass** das Bordsystem (11) ferner Einrichtungen zum Aufzeichnen und Speichern der erfassten und aufgenommenen Informationen mit einer gemeinsamen Zeitbasis aufweist, so dass bei der nachfolgenden Verarbeitung im Labor die gesamte Untersuchung in synchronisierter Form reproduziert werden kann, mit dem Ergebnis, dass über einen einzelnen Eingang direkter Zugriff auf jede beliebige der Datenquellen erhältlich ist.

10. Vorrichtung zum Untersuchen linearer Infrastrukturen nach Anspruch 1, **dadurch gekennzeichnet, dass** die Nachverarbeitungseinheit (12) Einrichtungen aufweist, welche zur Berechnung der geographischen Position der bei der Untersuchung erkannten Defekte sowie der Position der Infrastruktur selbst mittels Triangulationsalgorithmen geeignet sind, die zum Berechnen der globalen 3D-Position eines Objekts anhand von zwei aus verschiedenen Winkeln aufgenommenen Bildern entwickelt wurden, und ferner **dadurch gekennzeichnet, dass** die Nachverarbeitungsstufe (12) Einrichtungen zur automatischen Hotspot-Erkennung anhand der von dem Bordsystem (11) erfassten Infrarotspektrumbilder aufweist.

11. Vorrichtung zum Untersuchen linearer Infrastrukturen nach einem der Ansprüche 1- 10, **dadurch gekennzeichnet, dass** das Fahrzeug, in welchem das Bordsystem (11) installiert ist, ein Flugzeug oder ein Landfahrzeug ist.

12. Verfahren zum Untersuchen linearer Infrastrukturen, mit den folgenden Schritten:
- Verwenden gespeicherter Daten bezüglich der räumlichen Position der zu untersuchenden Infrastruktur,
- automatisches panoramisches visuelles Erfassen der zu untersuchenden linearen Infrastruktur und deren Umgebung in Videoformat,
- automatisches detailliertes visuelles Erfassen der Elemente der zu untersuchenden linearen Infrastruktur mittels digitaler Abbildungen der Elemente der genannten Infrastruktur,
- automatisches Erfassen der Elemente der untersuchten Infrastruktur im Infrarotspektrum und Erkennung möglicher Hotspots in der Einrichtung anhand dieser Bildern bei der Nachverarbeitung,
- Aufzeichnen der von den Sensoren, Filmkameras, Navigations- und Steuerungs- und Audiosensoren, welche Teil der Vorrichtung sind, erfassten Daten durch das Bordsystem (11) mit einer gemeinsamen Zeitbasis,
- Verwenden einer nicht an Bord des Fahrzeugs installierten Nachverarbeitungseinheit (12), welche die von der in dem Fahrzeug installierten Einheit bei der Untersuchung der linearen Infrastruktur erfassten Daten und Bilder verwaltet und analysiert,
- Speichern der von der Nachverarbeitungseinheit (12) verarbeiteten Daten,
- Erzeugen von Berichten über den Zustand, die Situation und Defekte, welche in der analysierten linearen Infrastruktur vorgefunden wurden.

13. Verfahren zum Untersuchen linearer Infrastrukturen, mit den folgenden Schritten:
- panoramisches visuelles Erfassen der zu untersuchenden linearen Infrastruktur und deren Umgebung durch manuelle Bedienung mit Bedienerintervention und in Videoformat,
- automatisches detailliertes visuelles Erfassen der Elemente der zu untersuchenden linearen Infrastruktur mittels digitaler Abbildungen der Elemente der genannten Infrastruktur,
- automatisches Erfassen der Elemente der untersuchten Infrastruktur im Infrarotspektrum und Erkennung möglicher Hotspots in der Einrichtung anhand dieser Bildern bei der Nachverarbeitung,
- Aufzeichnen der von den Sensoren, Filmkameras, Navigations- und Steuerungs- und Audiosensoren, welche Teil der Vorrichtung sind, erfassten Daten durch das Bordsystem (11) mit einer gemeinsamen Zeitbasis,
- Verwenden einer nicht an Bord des Fahrzeugs installierten Nachverarbeitungseinheit (12), welche die von der in dem Fahrzeug installierten Einheit bei der Untersuchung der linearen Infrastruktur erfassten Daten und Bilder verwaltet und analysiert,
- Speichern der von der Nachverarbeitungseinheit (12) verarbeiteten Daten,
- Erzeugen von Berichten über den Zustand, die Situation und Defekte, welche in der analysierten linearen Infrastruktur vorgefunden wurden.

14. Verfahren zum Untersuchen linearer Infrastrukturen nach den Ansprüchen 12 oder 13, **dadurch gekennzeichnet, dass** durch die Nachverarbeitungseinheit (12) erhaltene und verarbeitete Positionsdaten der linearen Infrastruktur die erforderliche Genauigkeit aufweisen, um das System bei nachfolgenden Untersuchungen linearer Infrastrukturen zu versorgen.

## Revendications

1. Dispositif d'inspection d'infrastructures linéaires qui est constitué d'un système (11) installé dans un mobile pour l'acquisition et la capture automatiques d'images et de données, et une unité de post-traitement (12), non embarquée sur le mobile, qui permet le traitement d'informations et/ou de signaux obtenus par le système embarqué (11), **caractérisé en ce que** l'acquisition et la capture d'images et de données par des moyens embarqués est exécutée quelque soit le mouvement du mobile, et avec divers angles et lignes de visées en même temps, visant lesdits moyens à l'infrastructure linéaire d'une manière automatique ou semi-automatique sur la base de données stockées dans le système, les données se rapportant aux positions spatiales des installations à inspecter.

2. Dispositif d'inspection d'infrastructures linéaires selon la revendication 1, **caractérisé en ce que** le système embarqué (11) comprend deux plate-formes giro-stabilisées (1, 2) fonctionnant indépendamment en même temps et quelque soit le mouvement du mobile, où lesdites plate-formes (1, 2) ont les moyens pour l'acquisition et la capture d'images.

3. Dispositif d'inspection d'infrastructures linéaires selon la revendication 2, **caractérisé en ce qu'**une des plate-formes giro-stabilisées (1) peut être dirigée ou visée soit automatiquement soit manuellement et comporte des moyens pour l'acquisition et la capture d'images en format vidéo de l'environnement de lignes et également un capteur infrarouge qui fournit des images infrarouges et des thermogrammes.

4. Dispositif d'inspection d'infrastructures linéaires selon la revendication 2, **caractérisé en ce que** l'autre plate-forme giro-stabilisée (2) est dirigée ou visée automatiquement et est constituée d'un système vidéo numérique qui capture des photographies numériques haute définition.

5. Dispositif d'inspection d'infrastructures linéaires selon les revendications précédentes, **caractérisé en ce que** les moyens d'acquisition d'images réalisent simultanément des images en format vidéo de l'infrastructure dans ses environnements, des images infrarouges et des thermogrammes, ainsi que des photographies numériques haute définition avec des informations détaillées se rapportant à l'état des installations de ladite infrastructure linéaire.

6. Dispositif d'inspection d'infrastructures linéaires selon les revendications précédentes, **caractérisé en ce qu'**il comporte des moyens qui utilisent les données stockées et acquises en temps réel par le système pour calculer et commander les lignées de visée des systèmes pour la capture de données et/ou d'images qui constitue le dispositif.

7. Dispositif d'inspection d'infrastructures linéaires selon la revendication 6, **caractérisé en ce que** les lignes de visée et les champs de vision des dispositifs d'acquisition d'images et de données sont indépendants les uns des autres et des caractéristiques paramétrables de l'infrastructure à inspecter.

8. Dispositif d'inspection d'infrastructures linéaires selon la revendication 1, **caractérisé en ce que** le système embarqué (11) comporte également des moyens pour l'acquisition de données de l'attitude du mobile ainsi que de la position géographique en temps réel.

9. Dispositif d'inspection d'infrastructures linéaires selon les revendications précédentes, **caractérisé en ce que** le système embarqué (11) comporte également des moyens pour enregistrer et stocker les informations acquises et capturer avec une base de temps commune de sorte que dans le traitement suivant dans le laboratoire, toute l'inspection peut être reproduite sous forme synchronisée, avec le résultat qu'un accès direct peut être obtenu à l'une quelconque des sources de données par une seule entrée.

10. Dispositif d'inspection d'infrastructures linéaires selon la revendication 1, **caractérisé en ce que** l'unité de post-traitement (12) possède des moyens aptes à calculer la position géographique des défauts détectés dans l'inspection ainsi que la position de l'infrastructure elle-même, par des algorithmes de triangulation développés pour calculer la position 3D globale d'un objet à partir de deux images prises de deux angles différents, et également **caractérisé en ce que** l'étage de post-traitement (12) possède des moyens pour une détection automatique de tâches lumineuses des images du spectre infrarouge acquises par le système embarqué (11).

11. Dispositif d'inspection d'infrastructures linéaires selon les revendications 1 à 10, **caractérisé en ce que** le mobile, sur lequel le système embarqué (11) est installé, est un avion ou un véhicule terrestre.

12. Procédé d'inspection d'infrastructures linéaires qui comprend:
- Utiliser des données stockées se rapportant à la position spatiale de l'infrastructure linéaire qui doit être vérifiée.
- Capture visuelle panoramique automatique de l'infrastructure linéaire à inspecter en format vidéo de l'infrastructure et de son environnement.
- Capture visuelle automatique détaillée des composants de l'infrastructure linéaire à inspecter au moyen d'images numériques des composants de l'infrastructure précitée.
- Capture automtique dans le spectre infrarouge des composants d'une infrastructure linéaire inspectée et détection de post-processus dans ces images de tâches lumineuses possibles dans l'installation.
- Enregistrement par le système embarqué (11) des données obtenues par les capteurs, des caméras qui filment, des capteurs de navigation et de contrôle et audio qui font partie du dispositif avec une base de temps commune.
- Utilisation d'une unité de post-traitement (12), non installée sur le mobile, qui manipule et analyse les données et images obtenues par l'unité installée dans celle-ci durant l'inspection de l'infrastructure linéaire.
- Stockage des données traitées par l'unité de post-traitement (12).
- Génération de rapports sur l'état, la situation et les défauts trouvés dans l'infrastructure linéaire analysée.

13. Procédé d'inspection d'infrastructures linéaires qui comprend:
- Capture visuelle panoramique de l'infrastructure linéaire à inspecter et de son environnement au moyen d'une opération manuelle avec intervention de l'opérateur, et en format vidéo.
- Capture visuelle détaillée automatique des composants de l'infrastructure linéaire à inspecter par des images numériques des composants de ladite infrastructure;
- Capture automatique dans le spectre infrarouge des composants de l'infrastructure linéaire inspectée et détection de post-processus dans ces images de tâches lumineuses possibles dans l'installation.
- Enregistrement par le système embarqué (11) des données obtenues par les capteurs, les caméras qui filment, les capteurs de navigation et de contrôle et audio qui font partie du dispositif avec une base de temps commune.
- Utilisation d'une unité de post-traitement (12), non installée sur le mobile, qui manipule et analyse les données et images obtenues par l'unité installée dans celle-ci durant l'inspection de l'infrastructure linéaire.
- Stockage des données traitées par l'unité de post-traitement (12).
- Génération de rapports sur l'état, la situation et les défauts trouvés dans l'infrastructure linéaire analysée.

14. Procédé d'inspection d'infrastructures linéaires selon les revendications 12 ou 13, **caractérisé en ce que** les données de positionnement d'infrastructures linéaires obtenues et traitées par l'unité de post-traitement (12) ont la précision nécessaire pour alimenter le système lors d'inspections d'infrastructures linéaires successives.
